# EUROPEAN PATENT SPECIFICATION

(11) **EP 1 993 692 B1**
(45) Date of publication and mention of the grant of the patent: **24.08.2016**
(21) Application number: 07752205.0
(22) Date of filing: 02.03.2007
(51) Int. Cl.: B01D 19/00, F04D 13/12, F04D 13/14, F04D 25/16, F04D 29/70

(54) **MULTIPHASE FLUID PROCESSING DEVICE**
VORRICHTUNG ZUR VERARBEITUNG MEHRPHASIGER FLÜSSIGKEITEN
DISPOSITIF DE TRAITEMENT DE FLUIDE MULTIPHASE

(30) Priority: 03.03.2006 US 778688 P
(43) Date of publication of application: 26.11.2008
(73) Proprietor: Dresser-Rand Company, Olean, NY 14760-0560 (US)
(72) Inventor: SOROKES, James, M., Olean, NY 14760 (US)
(74) Representative: Giles, Ashley Simon
(86) International application number: PCT/US2007/005489
(87) International publication number: WO 2007/103248

(56) References cited:
- FR-A1- 2 589 957
- US-A- 3 398 535
- US-A- 4 437 984
- US-A- 4 724 679
- US-A- 4 764 088
- US-A- 4 978 373
- US-A- 5 599 164
- US-A- 5 761 914
- US-A- 6 019 825
- US-A1- 2004 168 572
- US-B1- 6 171 074
- US-B1- 6 171 074

## Description

The present invention relates to fluid machinery, and more specifically to machinery for handling multiphase fluid streams.

A variety of devices for handling fluid streams, such as separators, compressors and pumps, are known. A separator basically functions to separate a fluid stream into different phases, such as into liquid and gaseous portions, and/or may be used to remove solid matter from a fluid stream. Compressors and pumps basically function to respectively compress gases and pressurize liquids, often for the purpose of transporting a fluid. Typically, when a fluid stream is composed of both gaseous and liquid portions, the fluid stream is first separated, and then the gaseous portions are directed into a compressor and the liquid portions are directed into a pump so as to be separately treated.

A previously-proposed compression pumping device associated with a separator is disclosed in US6171074 B1.

### SUMMARY OF THE INVENTION

In one aspect, the present invention is a fluid processing machine for processing a multiphase fluid stream including a mixture of at least a gas and a liquid. The fluid processing machine comprises a housing having an interior chamber, an inlet fluidly connected with the interior chamber and fluidly connectable with a source of the multiphase stream, and first and second outlets. A separator is disposed within the housing chamber, is fluidly coupled with the inlet such that the fluid stream flows generally to the separator, and is configured to generally separate the fluid stream into a substantially gaseous portion and a substantially liquid portion. A compressor is disposed within the housing chamber and is fluidly coupled with the separator such that the gaseous portion flows into the compressor, the compressor being configured to compress the gaseous portion and to discharge the compressed gaseous portion through the housing first outlet. Further, a pump is disposed within the housing chamber and has an inlet fluidly coupled with the separator, the pump being spaced generally vertically from the separator such that liquid portions flow at least partially by gravity from the separator to the pump inlet. The pump is configured to pressurize the liquid portions and to discharge the pressurized liquid portions through the housing second outlet. axis extending through the chamber, an inner surface extending circumferentially about the axis and at least partially defining the chamber, an inlet fluidly connected with the housing chamber and configured to receive the multiphase stream, and first and second outlets fluidly connected with the chamber. A separator is disposed within the housing chamber, is fluidly coupled with the inlet such that the fluid stream flows generally from the inlet to the separator, and is configured to generally separate the fluid stream into a substantially gaseous portion and a substantially liquid portion. A compressor is disposed within the housing chamber so as to be spaced axially from the separator, is fluidly coupled with the separator so as to receive the gaseous portion from the separator and has an outlet fluidly connected with the housing first outlet. The compressor is configured to compress the gaseous portion and to discharge the compressed gaseous portion through the housing first outlet, the compressor having an outer surface spaced inwardly from the housing inner surface so as to define at least one flow passage extending generally parallel with the housing axis. Further, a pump is disposed within the housing chamber so as to be spaced axially from the separator such that the compressor is disposed generally between the separator and the pump. The pump has an inlet fluidly coupled with the separator through the at least one flow passage so as to receive the liquid portion from the separator, the pump being configured to pressurize the liquid portions and to discharge the pressurized liquid portion through the housing second outlet.

In a further aspect, the present invention is also a fluid processing machine for processing a multiphase fluid stream with gaseous portion and liquid portions. The fluid processing machine comprises a housing including an interior chamber, an inner circumferential surface at least partially defining the chamber, an inlet extending into the chamber and configured to receive the multiphase stream, and two outlets extending out of the chamber. A separator is disposed within the housing chamber, is fluidly coupled with the inlet such that the fluid stream flows to the separator, and is configured to generally the fluid stream into substantially gaseous portion and a substantially liquid portion. A compressor is disposed within the housing chamber generally beneath the separator, has an inlet fluidly coupled with the separator so as to receive the gaseous flow from the separator, and is configured to compress the gaseous flow and to discharge the compressed gaseous flow from the housing through the first outlet. The compressor further has an outer surface spaced inwardly from the housing inner surface such that a generally annular flow channel is defined between the two surfaces, the flow channel being fluidly coupled with the separator. Also, a collector chamber section is defined within the housing

### BRIEF DESCRIPTION OF THE SEVERAL VIEWS OF THE DRAWINGS

The foregoing summary, as well as the detailed description of the preferred embodiments of the present invention, will be better understood when read in conjunction with the appended drawings. For the purpose of illustrating the invention, there is shown in the drawings, which are diagrammatic, embodiments that are presently preferred. It should be understood, however, that the present invention is not limited to the precise arrangements and instrumentalities shown. In the drawings:
Fig. 1 is an axial cross-sectional view of a multiphase fluid processing machine in accordance with the present invention;
Fig. 2 is an enlarged, broken-away view of an upper portion of the fluid processing machine, showing a separator, a plenum chamber and a compressor inlet of the fluid processing machine;
Fig. 3 is a radial cross-sectional view of the fluid processing machine taken through line 4-4 of Fig. 2;
Fig. 4 is a greatly enlarged, top perspective view of the separator;
Fig. 5 is a greatly enlarged, axial cross-sectional view of a separator;
Fig. 6 is an enlarged, broken-away view of a central portion of the fluid processing machine, showing a compressor and liquid flow passage of the fluid processing machine;
Fig. 7 is a radial cross-sectional view of the fluid processing machine taken through line 7-7 of Fig. 6;
Fig. 8 is a greatly enlarged, top perspective view of an impeller of the compressor;
Fig. 9 is an enlarged, broken-away view of a lower portion of the fluid processing machine, showing a pump and an adjustable vane assembly of the fluid processing machine;
Fig. 10 is a radial cross-sectional view of the fluid processing machine taken through line 10-10 of Fig. 9;
Fig. 11 is a radial cross-sectional view of the fluid processing machine taken through line 11-11 of Fig. 9;
Fig. 12 is a top plan view of a baffle plate for distributing liquid flow into the pump; and
Fig. 13 is an axial cross-sectional view of an alternative multiphase fluid processing machine, in which the pump is replaced by a fluid collector.

### DETAILED DESCRIPTION OF THE INVENTION

Certain terminology is used in the following description for convenience only and is not limiting. The words "upper", "upward", "down" and "downward" designate directions in the drawings to which reference is made. The words "inner", "inwardly" and "outer", "outwardly" refer to directions toward and away from, respectively, a designated centerline or a geometric center of an element being described, the particular meaning being readily apparent from the context of the description. Further, as used herein, the word "connected" is intended to include direct connections between two members without any other members interposed therebetween and indirect connections between members in which one or more other members are interposed therebetween. The terminology includes the words specifically mentioned above, derivatives thereof, and words of similar import.

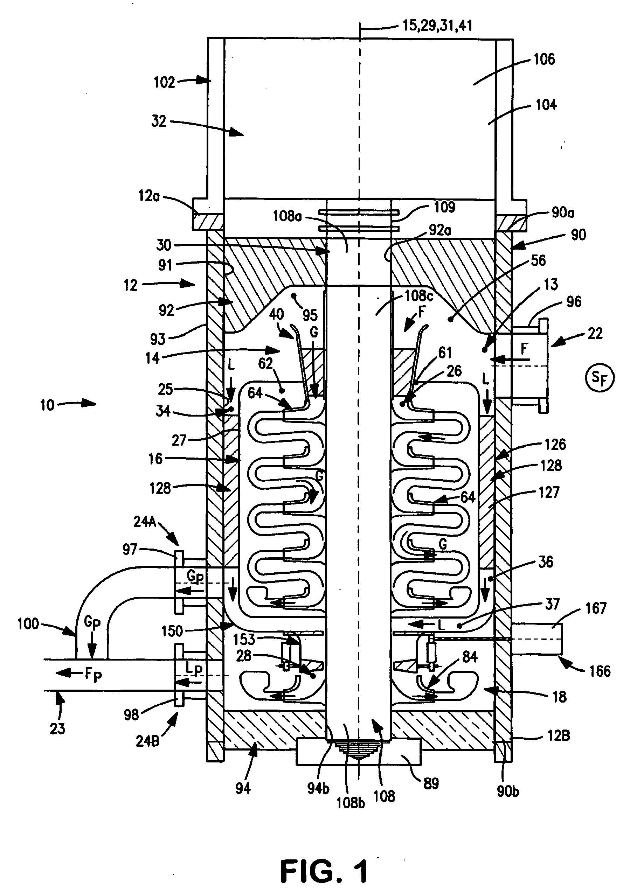

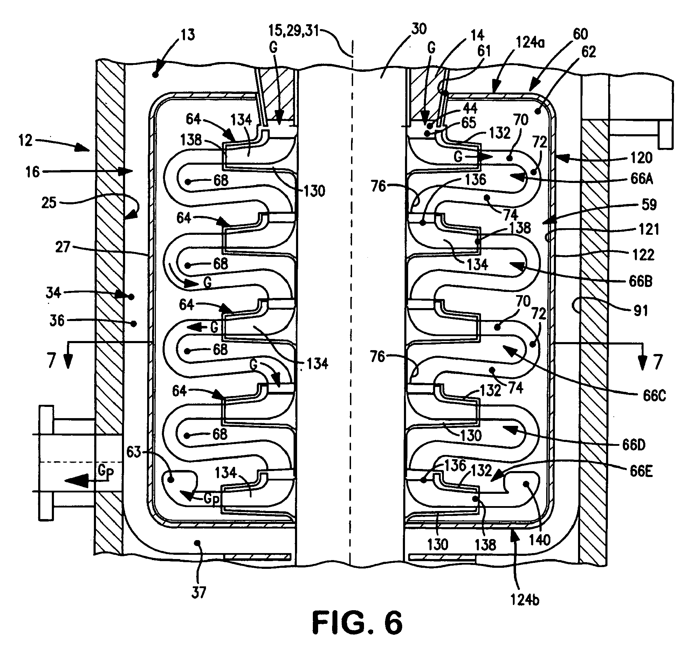

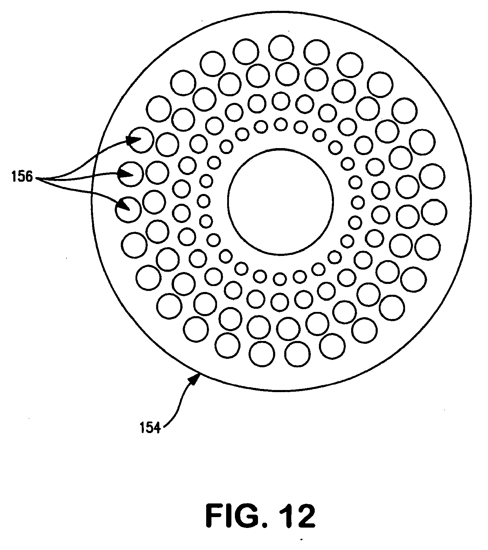

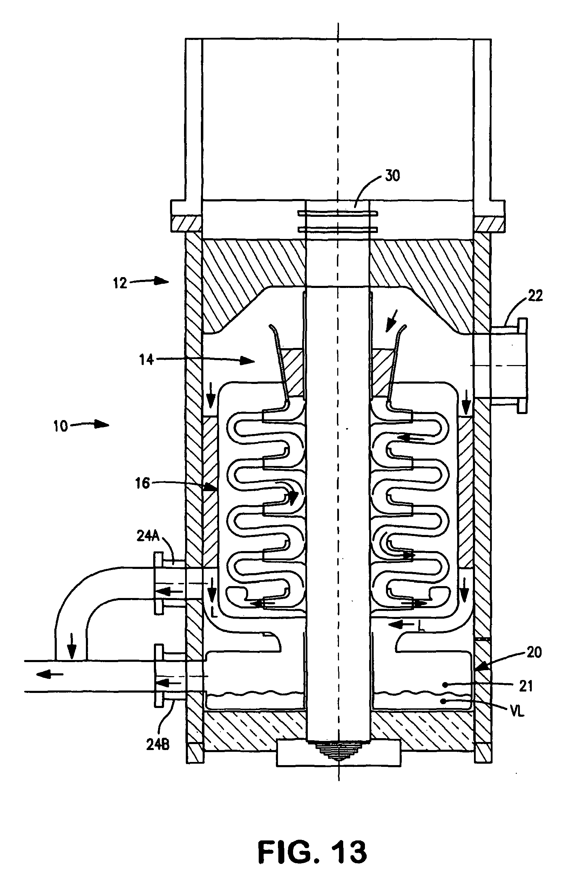

Referring now to the drawings in detail, wherein like numbers are used to indicate like elements throughout, there is shown in Figs. 1-13 a multiphase fluid processing machine 10 for processing a multiphase fluid stream F that includes a mixture of at least a gas G and a liquid L. The fluid processing machine 10 basically comprises a housing 12 having an interior chamber 13, and a separator 14, a compressor 16, and a pump 18 or a liquid collector 20 (Fig. 13) each disposed within the housing chamber 13. The housing 12 has an inlet 22 fluidly connected with the interior chamber 13 and fluidly connectable with a source S_{F} of the multiphase fluid stream F, and first and second outlets 24A, 24B. The separator 14 is fluidly coupled with the housing inlet 22, such that the fluid stream F flows generally to the separator 14, and is configured to generally separate the fluid stream F into a substantially gaseous portion G and a substantially liquid portion L. The compressor 16 is fluidly coupled with the separator 14 such that the stream gaseous portion G flows into the compressor 16, and is configured to compress the gaseous portion G and to discharge the compressed gaseous portion G through the housing first or "gas" outlet 24A. Preferably, the compressor 16 is disposed generally beneath the separator 14, and is most preferably located generally between the separator 14 and the pump 18. However, the compressor 16 may alternatively be spaced generally horizontally from (i.e., as opposed to vertically lower or beneath), or even generally above the separator 14 such that the separator 14 is disposed generally between compressor 16 and the pump 18.

Further, the pump 18 has an inlet 28 fluidly coupled with the separator 14, which according to the invention is spaced generally vertically from, so as to be located generally beneath, the separator 14 such that the stream liquid portion L flows at least partially by gravity from the separator 14 to the pump inlet 28. However, the separator 14 and/or pump 18 may be configured such that the stream liquid portion L flows substantially by suction generated by the pump 18, particularly when the separator 14 and pump 18 are horizontally spaced, or by any other appropriate means. In any case, the pump 18 is configured to pressurize the liquid portion L of the flow stream F and to discharge the pressurized liquid portion L through the housing second or "liquid" outlet 24B. Alternatively, the fluid machine 10 may instead have a liquid collector 20 disposed generally beneath the compressor 16 and fluidly coupled with the separator 14 and with the housing second outlet 24B, the collector 20 having chamber 21 configured to contain a quantity or "accumulated volume" VL of the liquid portions L, as shown in Fig. 13.

As best shown in Fig. 1, the fluid processing machine 10 preferably further comprises a drive shaft 30 extending generally vertically through the housing chamber 13 and rotatable about a central axis 31. Each one of the separator 14, the compressor 16, and the pump 18 having at least one rotatable member 40, 64, and 84, respectively, connected with the shaft 30 and spaced apart vertically along the shaft axis 31. As such, rotation of the drive shaft 30 about the axis 31 generally operates each one of the separator 14, the compressor 16 and the pump 18, as described in greater detail below. Alternatively, the fluid processing machine 10 may include two or more separate shafts (structure not shown) each rotatably driving one or more of the separator 14, the compressor 16, and the pump 18. Furthermore, the processing machine 10 preferably further comprises a motor 32 connected with the shaft 30 and configured to rotate the shaft 30 about the central axis 31, the motor 32 preferably being mounted to one end 12a or 12b of the housing 12, as discussed in further detail below.

Referring to Figs. 1, 6 and 7, the housing 12 preferably includes an inner surface 25 at least partially defining the housing chamber 13 and the compressor 16 has an outer surface 27 spaced from the housing inner surface 25. As such, at least one liquid flow passage 34 is at least partially defined between the two surfaces 25, 27, the flow passage 34 being configured to fluidly couple the separator 14 with the pump 18. Preferably, the housing 12 further has a centerline or axis 29 and the housing inner surface 25 extends circumferentially about the centerline 29, the shaft axis 31 preferably being generally collinear with the housing axis 29 when the drive shaft 30 is disposed within the housing 12. The compressor 16 preferably has a centerline 15 which is collinear with the shaft axis 31, the compressor outer surface 27 extending circumferentially about the centerline 15 and being spaced radially inwardly from, so as to be disposed coaxially within, the casing inner surface 25. As such, a first portion 36 of the liquid flow passage 34 is generally annular and extends both generally along and generally about the housing axis 29. Preferably, the liquid passage annular portion 36 has an annular inlet port 36a fluidly coupled with a plenum chamber 56 (described below) defined about the separator 14 and an annular outlet port 36b fluidly coupled with the pump inlet 28. Specifically, the liquid flow passage 34 preferably further includes a generally radially extending portion 37 defined between the compressor 16 and the pump 18 and directly fluidly coupled with the pump inlet 28. As such, the liquid passage radial portion 37 fluidly connects the passage annular portion 36, and thus the plenum chamber 56 and separator 14, with the pump inlet 28.

With the preferred arrangement of the separator 14, the compressor 16 and the pump 18, the annular portion 36 of the liquid flow passage 34 extends generally vertically such that gravity at least partially initiates flow of the liquid through the flow passage 34, as discussed above. More specifically, the separator 14 is configured to direct liquid generally radially outwardly toward the housing inner surface 25, such that liquid portions L flow into the liquid flow channel 34 and thereafter flow at least partially by gravity to the pump inlet 28, such flow preferably being further initiated or "driven" by suction at the pump inlet 28. Further, the radial portion 37 of the liquid flow passage 34 preferably extends generally horizontally between the vertical annular portion 37 and the pump inlet 28.

Referring to Figs. 1-5, the separator 14 preferably includes a body 40 rotatable about a central axis 41, the separator body 40 having a first and second end 40a, 40b, respectively. The first or "upper" body end 40a has a first or "stream inlet" opening 42 fluidly coupled with the housing inlet 22 so as to receive the fluid stream F and the second or "lower" body end 40b has a second or "gas outlet" opening 44 fluidly coupled with the compressor 16. An inner separation surface 46 extends circumferentially about the axis 41 and generally between the body first and second ends 40a, 40b. Further, the separation surface 46 defines a separation chamber 48 and is angled generally radially outwardly in a direction d₁ toward the body first end 40a. With this structure, as the separator body 40 rotates about the axis 41, liquid portions L of the fluid stream F contact the inner separation surface 46 are directed generally radially outwardly away from the body axis 41 and generally axially toward, and beyond, the body first end 40a. In other words, centrifugal force generated by rotation of the separator 14 causes the relatively heavier liquid portions L contacting the rotating inner separation surface 46 to slide upwardly and outwardly the along the angled inner surface 50 until the liquid portions are projected or "slung" from the body upper end 40a in a spiral path toward the housing inner surface 25. As such, the liquid portions L are directed to flow back out through the body first opening 42 while a remainder of the fluid stream F, i.e., the substantially gaseous portions G, flows in the downward direction d₂ through the body second opening 44, and thereafter into the compressor 16.

Further, the separator 14 preferably further includes an outer separation surface 50 extending circumferentially about the body axis 41 and generally between the body first and second ends 40a, 40b. As with the inner surface 46, the outer separation surface 50 is angled generally radially outwardly in the direction d₁ toward the body first end 40a. As such, as the separator body 40 rotates about the axis 41, liquid portions L of the fluid stream F contacting the outer separation surface 50 are directed generally radially outwardly away from the body axis 41 and generally axially toward the body first end 40 so as to be directed generally toward the housing inner surface 25. In other words, centrifugal forces cause the relatively heavier liquid portions L contacting the rotating outer separation surface 50 to slide upwardly and outwardly the along angled outer separation surface 50 until being projected/slung from the separator body upper end 40a in a generally spiral path toward the housing inner surface 25. Furthermore, the separator 14 is preferably located within the housing chamber 13 such that the separator body first, upper end 40a, and thus the fluid stream inlet opening 42, is spaced generally vertically upwardly with respect to the housing inlet 22. As such, the fluid stream F tends to contact or flow across the outer separation surface 50 prior to entering the separator 14, which contributes to separation of the liquid portions L from the flow stream F, as discussed in further detail below.

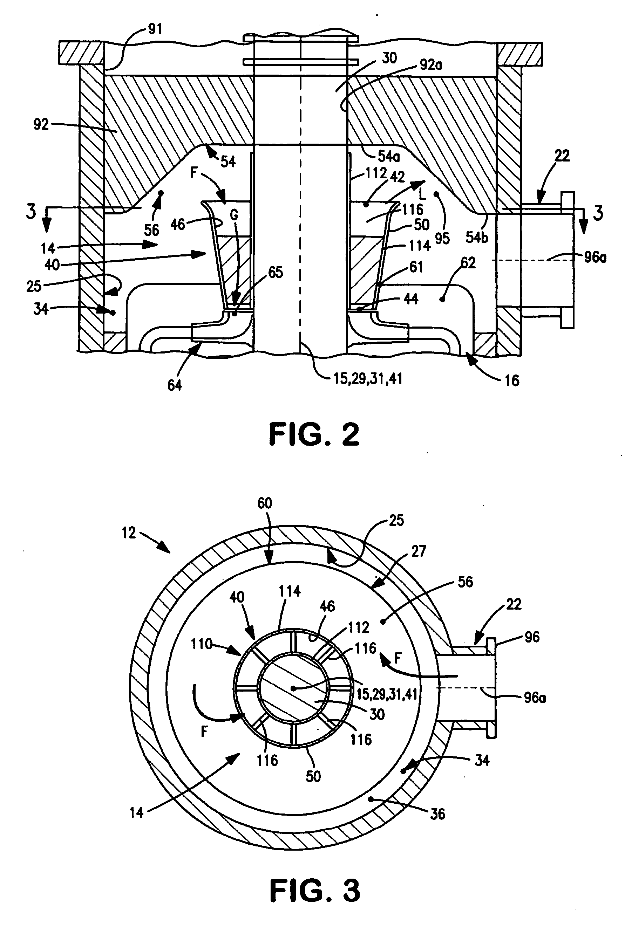

Referring now to Figs. 1 and 2, the housing 13 preferably further includes a generally concave wall 54 disposed within the interior chamber 13 so as to define a plenum chamber 56, and the separator 14 is disposed at least partially within the plenum chamber 56. The housing plenum wall 54 is arranged with respect to the housing inlet 22 such that multiphase fluid stream F is directed to flow radially about the separator axis 41 and/or generally parallel with respect to the axis 41 prior to entering the separator opening 42. As such, the fluid stream F preferably contacts the plenum wall 54 prior to entering the separator 14 such that liquid portions L tend to adhere to the plenum wall 54. The plenum wall 54 extends generally radially across the upper end of the housing chamber 13 and has an upper enclosed end 54a disposed generally on the housing centerline 29 and a lower edge 54b extending circumferential about the centerline 29 and disposed generally against the housing inner surface 25. As such, liquid portions L adhering to the plenum wall 54 tend to flow toward the wall edge 54b and thereafter into and through the preferred liquid flow passage 34, as described above and in further detail below.

Referring now to Figs. 1 and 6-8, the compressor 16 is preferably a centrifugal compressor 59 that basically includes a casing 60 disposed within the housing 12 and defining an interior chamber 62 and at least one rotatable impeller 64 disposed within the casing chamber 62 and having an inlet 65. The casing 60 has an inlet opening 61 configured to receive a portion of the separator 14 and an outlet 63 fluidly coupled with the housing first, gaseous outlet 24A. Preferably, the separator body 40 is disposed within or extends through the compressor casing inlet 61, such that the separator body second end 40b is disposed within the compressor chamber 42, thereby fluidly coupling the separator gas outlet 44 with the impeller inlet 65. More specifically, the separator body second end 40b is preferably located generally adjacent to the impeller inlet 65, such that gaseous portions G flow out of the separator outlet 44 and substantially directly into the impeller inlet 65. As such, there is no need for any component (e.g., a pipe or tube) for directing the stream gas portion G from the separator 14 into the compressor 16. However, the separator 14 and compressor 16 may be alternatively arranged such that the separator outlet end 40b is disposed within the impeller opening 65, or even spaced a substantial distance from the opening 65. For example, the separator 14 may be disposed entirely externally of the compressor casing 62 with the separator gas outlet 44 being fluidly coupled with the compressor casing inlet opening 61, such that the stream gas portion G flows through the casing inlet opening 61 prior to entering the impeller inlet 65.

Further, the one or more impellers 64 are each configured to compress the gaseous fluid portions G flowing into the impeller inlet 65 and to discharge the gaseous portions G through the casing outlet 63, which thereafter flows through the housing first outlet 24A, as described in further detail below. Most preferably, the centrifugal compressor 59 is a "multistage" centrifugal compressor having a plurality of compression stages 66, each compression stage 66 including one impeller 64 and one fixed flow channel assembly 68 disposed about the impeller 64. Each flow channel assembly 68 includes a diffuser channel 70, a return bend channel 72, a return channel 74 and a guide vane 76. As such, compressed gaseous portions G flowing radially outwardly in a "swirl" from one compression stage 66 flows outwardly through the diffuser channel 70, directed back radially inwardly as it flows through the return bend channel 72 and the return channel 74, and is directed by the guide vane 76 generally axially into an adjacent compressor stage 66, or with the final stage 66, through the casing outlet 63.

Referring to Figs. 1 and 9-12, the pump 18 is preferably a rotary pump, most preferably a centrifugal pump 80 that basically includes a casing 82 and a rotatable impeller 84. The casing 82 is disposeable within the housing 12 and has an interior chamber 86, an axially extending suction nozzle 87 providing the pump inlet 28, and an outlet or discharge nozzle 88 fluidly coupled with the housing second, liquid outlet 24B. The impeller 84 is configured to pressurize liquid portions L flowing into the suction nozzle 81 and to direct the pressurized liquid L_{P} toward the discharge nozzle 88, and thereafter to the housing second outlet 24B. More specifically, the impeller 84 preferably has a plurality of circumferential spaced, generally radially extending vanes 83 configured to direct liquid radially outwardly from the rotating impeller 84, thereby imparting kinetic energy to the liquid. Also, the casing 82 is further configured to provide a volute chamber 89 defined generally between the impeller 84 and the discharge nozzle 88, which functions to decelerate and pressurize liquid flowing from the impeller 84, as is well known to those skilled in the pump and fluid machinery arts.

With the basic structure described above, the fluid processing machine 10 of the present invention basically functions as follows. A multiphase fluid stream F enters the housing 12 through the housing inlet 22 and flows into the plenum chamber 56, swirls about and flows into the separator 14. Liquid portions L are separated from the remaining, substantially gaseous portions G of the fluid stream F, and are directed into the liquid flow passage 34. Generally simultaneously, the gaseous portions G flow into the compressor inlet 26 and are pressurized or compressed such that the gas pressure is incrementally increased as the gas portions G flow through each compressor stage 66. The pressurized gas portions Gp are discharged from the compressor 16 and flow out the housing through the housing gas outlet 24A. Further, the separated liquid portions L entering the liquid flow passage 34 flow by gravity (and suction) through the passage vertical portion 36, and thus around the compressor 16, and then through the passage horizontal portion 37 beneath the compressor 16 and into the pump inlet 28. The preferred centrifugal pump 80 then pressurizes the liquid portions L_{P} as the portions L_{P} are accelerated radially outwardly by the impeller 84, and the pressurized liquid portions L_{P} flow out of the housing through the liquid outlet 24B. Preferably, the pressurized gas and liquid portions G_{P}, Lp are merged or remixed in a common outlet pipe 23 connected with both of the housing outlets 24A, 24B, such that the pressurized fluid stream Fp is further processed or utilized, but the two pressurized flows G_{P}, L_{P} may alternatively remain distinct so as to be thereafter separately processed or utilized.

Having described the basic components and functions above, these and other elements of the fluid processing machine of the present invention are described in greater detail below.

Referring to Figs. 1, 2, 4, 6, 7 and 9-11, the housing 12 preferably includes a generally circular tubular body 90 with opposing axial ends 90a, 90b and two generally circular cylindrical end walls 92, 94 disposed at a separate body end 90a, 90b, respectively. The tubular body 90 has an inner surface 91 providing the housing inner circumferential surface 25, such that the housing chamber 13 is generally cylindrical shaped, and an opposing outer circumferential surface 93. Further, each housing end wall 92, 94 encloses the proximal end 90a, 90b of the tubular body 90 and has a generally circular central shaft opening 92a, 94a configured to receive a portion of the drive shaft 30. The first or upper end wall 92 is preferably relatively thicker than the second, lower end wall 94 and includes a generally frustaconical shaped cavity 95. With this structure, the upper end wall 92 provides the plenum wall 54 and the end wall cavity 95 provides the plenum chamber 56, as described above. Alternatively, the plenum chamber 56 may be provided by a separate dish-shaped body (not shown) disposed generally adjacent to the upper end wall 92. Further, the housing lower end wall 94 preferably includes a bearing assembly 89 disposed at least partially within the wall opening 94a and configured to support the drive shaft 30.

Preferably, the housing inlet 22 and each housing outlet 24A, 24B includes a separate generally circular tube or pipe section 96, 97, 98, respectively, extending outwardly from the outer surface 93 of the housing tubular body 90. The inlet pipe 96 is located generally proximal to the body upper end 90a and preferably has a centerline 96a that extends generally perpendicularly to the housing centerline 29 and spaced below the separator fluid inlet 42, such that the fluid stream F tends to "swirl about" the centerline 29, and thus about the separator 14, upon entry into the plenum chamber 56, as described above. Also, the inlet pipe 96 is connected or connectable with the source of the fluid stream (not shown), preferably by one or more pipes (none shown). Furthermore, each of the two outlet pipes 97, 98 are disposed generally adjacent to the housing body lower end 90b and are each generally radially aligned with the outlet of the compressor 16 and pump 18, respectively, such that the second, liquid outlet pipe 97 is spaced generally axially below the first, gas outlet pipe 98, as shown in Fig. 1. Preferably, the two outlet pipes 97, 98 are connected together so as to extend into a single outlet conduit 100, such that the pressurized gaseous and liquid portions G_{P}, L_{P} are merged after respective compression and pressurization. However, the two outlet pipes 97, 98 may be separately connected to additional piping (none shown) such that the pressurized fluid, and gaseous portions G_{P}, L_{P} remain separated for independent use or further separate treatment.

As shown in Fig. 1, the housing 12 also preferably includes a generally circular tubular motor housing 102 having an inner axial end 102a disposed generally against and attached to the tubular body upper end 90a, but may alternatively be mounted to the housing body lower end 90b. The motor housing 102 has an inner bore providing a motor chamber 104 for housing the preferred motor 32, as discussed above. By arranging the motor housing 102 vertically above the remainder of the processing machine components, the chance of liquid intrusion into the motor 32 is minimized. However, the motor chamber 104 may be otherwise provided, such as for example, mounting the housing 102 to the lower end 90b of the tubular housing 90, forming the housing 102 as an upper, integral portion of the tubular body 90 defined by spacing the upper end wall 92 axially inwardly, by a separate housing spaced from the tubular body 90, etc. (neither shown), or the motor 32 may even be directly mounted to the housing 12 without any covering or housing.

Further, the motor 32 is preferably an electric motor 106 configured to rotate the shaft 30 about its axis 31, but may alternatively be a hydraulic motor, a steam or gas turbine, or any other appropriate motor, engine or "prime mover". The preferred shaft 30 includes an elongated circular bar 108 positioned in the fluid machine 10 so as to extend longitudinally through the housing chamber 13 and having upper and lower portions 108a, 108b disposed within the housing end wall shaft openings 92a, 94a. The shaft body 108 has an outer mounting surface 109 configured to accept at least one rotatable component 40, 64 and 84 of the separator 14, the compressor 16 and the pump 18, as discussed above and in further detail below. Further, the shaft 30 is preferably directly driven by the motor 32, as described above, but may alternatively be driven through a gear train, belt drive or other appropriate transmission means (none shown).

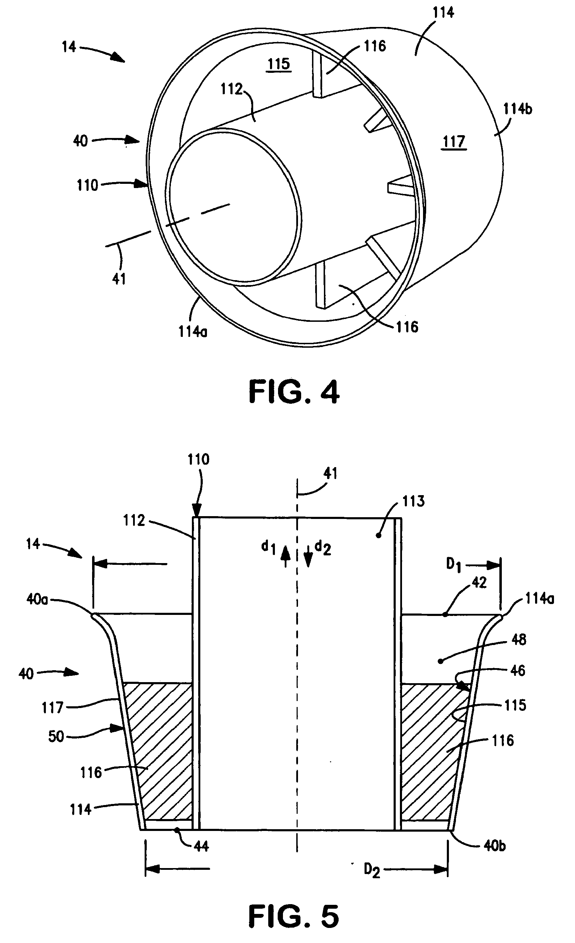

Referring to Figs. 1-5, the separator body 40 is preferably constructed as a generally conical drum 110 that includes an inner tubular hub member 112, an outer tubular member 114 disposed coaxially about a portion of the hub member 112, and a plurality of vanes 116 extending between and connecting the inner and outer tubular members 112, 114. The inner hub member 112 is preferably formed as a generally circular tube and has a central bore 113, a portion 108c of the shaft body 108 being disposed within the bore 113 so as to mount the separator 14 to the shaft 30. Referring particularly to Fig. 5, the outer tubular member 114 has an upper, generally circular inlet end 114a with a first diameter D₁, a lower, generally circular outlet end 114b with a second diameter D₂. The first diameter D₁ is larger than the second diameter D₂, such that the tubular member 114 tapers inwardly in a direction d₂ downwardly along the axis 41. As such, the outer tubular member 114 has inner and outer, generally conical surfaces 115, 117 providing the inner and outer separation surfaces 46, 50, respectively. Each conical surface 115, 117 extends circumferentially about the hub member 112, the inner surface 115 facing generally toward the outer member upper end 114a and the outer surface 117 facing generally toward the body lower end 114b.

With the above separator structure, the multiphase flow machine 10 provides the function of separating the fluid stream F into at least gaseous and liquid portions G, L in generally the following manner. The fluid stream F flows through the housing inlet 22 so as to initially swirl around the plenum chamber 56 and about the separator 14, causing some of the liquid portions L to adhere to the plenum wall 54 and other liquid portions L to adhere to the outer separation surface 50. The liquid portions L on the plenum wall 54 flow by gravity toward the liquid flow passage 34. Rotation of the separator body 40 causes the liquid portions L on the outer separation surface 50 to flow radially outwardly therealong until being projected radially outwardly toward the plenum wall 54, and thereafter flow either directly into the passage 34 or from the wall 54 into the passage 34. Further, the remainder of the fluid stream F is drawn into the separator upper opening 42 by suction at the compressor inlet 26, such that remaining liquid portions L contact the inner separation surface 46. As with the outer surface 50, the liquid portions L on the inner surface 46 are caused to flow radially outwardly along the surface 46 until being projected or slung radially outwardly toward the plenum wall 54, to thereafter flow directly or indirectly into the liquid flow passage 34. The substantially gaseous portions G of the fluid stream then flow through the compressor inlet 26.

Although the conical drum separator 110 with inner and outer conical separation surfaces 115, 117 is presently preferred, it is within the scope of the present invention to construct the separator 14 in any other appropriate manner that permits the fluid processing machine 10 to function generally as described herein. For example, the separator 14 may be constructed as a rotary separator having only one of the inner and outer angled separation surfaces 46, 50, the other surface 50 or 46 being substantially vertical or otherwise formed (e.g., a conical outer surface and generally circular bore, a generally cylindrical body with a conical bore, etc). Further for example, the separator 14 may be formed as any other appropriate type of fluid separator device, such as a cylindrical cyclonic separator, an inline rotary separator, or a separator tank, and/or may be configured to remove solid matter from the fluid stream or to separate the fluid stream into two or more liquid portions of varying density. The present invention embraces these and all other appropriate constructions of the separator 14, and the scope of the present invention is in no manner limited to any specific type or/and arrangement of the separator 14.

Referring to Figs. 1, 6 and 7, the compressor casing 60 includes a generally circular tubular wall 120 and first and second, generally circular, radially extending end walls 124A, 124B disposed at each axial end of the tubular wall 120. The casing tubular wall 120 has an inner and outer circumferential surfaces 121, 122, the inner surface 121 defining the compressor chamber 62. The tubular body outer surface 122 provides the compressor outer surface 27 as described above; specifically, the body inner surface 122 is spaced radially inwardly from the housing inner surface 91 so as to thereby form the generally annular liquid passage vertical portion 36, as described above. Further, each casing end wall 124A, 124B includes a central opening 125A, 125B, respectively. The upper end wall opening 125A is configured to receive a portion of the preferred separator 14, and thus provides the compressor inlet 26, and the lower end wall opening 125B is sized to receive a portion of the drive shaft 30, such that the shaft 30 extends at least partially therethrough.

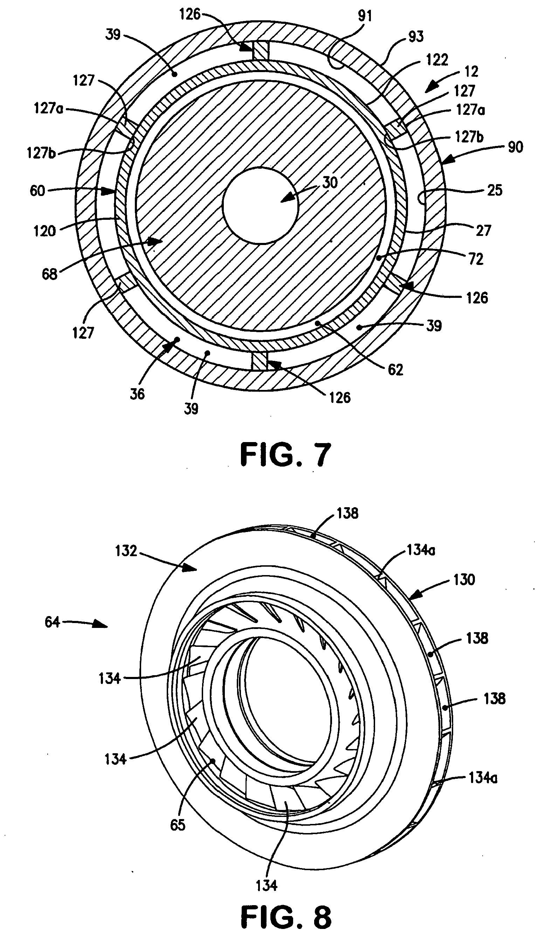

Preferably, the compressor 16 is mounted within the multiphase fluid machine 10 by a plurality of support members 126 spaced circumferentially about the housing axis 29 and configured to mount the compressor 16 coaxially within the housing 12, as discussed above. Each support member 126 preferably includes or is formed as a vertically-extending, elongated strut 128 that extends between the housing wall inner surface 91 and the casing wall outer surface 122 and is configured to connect the casing 60 with the housing 12. Further, each strut 128 is formed of an elongated rectangular bar 127 having an outer vertical edge 127a attached to the housing inner surface 91 and an opposing inner vertical edge 127b attached with the casing outer surface 122, as indicated in Fig. 7. Further, the struts 127 each extend substantially through the entire axial length of the liquid passage vertical portion 36, such that the liquid flow passage 34 is thereby divided into plurality of vertical passage sections 39 (see Fig. 7). Although the struts 128 are presently preferred, the compressor casing 60 may be retained within the housing 12 by any other appropriate means, such as for example, one or more support blocks (none shown) configured to support and space the compressor 16 radially within the housing chamber 13, etc.

Referring now to Figs. 1 and 6-8, as discussed above, the compressor 16 is preferably a multistage centrifugal compressor 59 having a plurality of compression stages 66, for example five stages 66A, 66B, 66C, 66D and 66E as depicted, that each include a rotatable impeller 64 and a fixed flow channel assembly 68. The impellers 64 are mounted to the shaft 30 so as to be spaced apart vertically along the shaft axis 31 and each flow channel assembly 68 is disposed generally between the associated impeller 64 and the casing body inner surface 121. Each impeller 64 basically includes a generally cylindrical hub 130, a generally conical shroud 132 spaced axially from the hub 130 and a plurality of radial blades 134 extending between the hub 130 and shroud 132 and spaced circumferentially apart from each other. Each impeller inlet 65 is generally defined between the associated shroud 132 and hub 130 (or shroud 132 and shaft 30) so as to be generally annular, and each impeller 64 further has a plurality of circumferentially spaced outlets 138 defined between the outer radial blade ends 134a. As such, fluid (i.e., the gaseous portions G) flows generally axially into each impeller inlet 65 and is then directed radially outwardly from the shaft axis 31 through the series of outlets 138, such that the pressure of the gas portion G progressively increases as it passes through each compression stage 66. Further, each flow channel assembly 68 is preferably mounted within the casing 10 by assembling the various structural components (not indicated) of the channel assembly 68 about an impeller 64 mounted on the shaft 30 so as to form one compressor stage 66, and is configured to provide one diffuser channel 70, one return bend channel 72, one return channel 74 and a guide vane 76, each such component being generally known in the art of centrifugal compressors.

With the above compressor structure, gaseous portions G flow into the compressor 14 through the casing inlet 61 (i.e., as the gas portion G passes to the separator gas outlet 44) and then flows from the separator outlet 44 generally directly into the inlet 65 of the impeller 65 of the first stage 66A. The gaseous portions G are accelerated by the rotating blades 134 to flow both radially and tangentially outwardly from the impeller outlets 138 so as to "swirl" in a generally spiral manner through the associated diffuser channel 70, is curved back inwardly toward the shaft 30 by the connected return bend channel 72, such that swirl is removed in the return channel 74 as the fluid flows back toward the shaft 30, and is diverted by the guide vane 76 to flow axially into the impeller inlet 136 of the adjacent or second compressor stage 66B. This flow pattern is repeated through the second, third, fourth stages 66B, 66C, and 66D, etc. However, the flow channel assembly 68 of the last compressor stage 66E includes only a diffuser channel 95 that directs fluid flow into a volute 140 prior to flowing out of the compressor outlet 63 and to the housing first, gas outlet 24A.

Although a multistage centrifugal compressor 59 as described above is presently preferred, the compressor 16 may alternatively be constructed as a single stage centrifugal compressor (not shown) or any other type of compressor capable of compressing a gas, such as for example, a reciprocating compressor, a rotary screw compressor, etc. It is within the scope of the present invention to construct the compressor 16 in these or any other appropriate configuration that is capable of compressing the gaseous portions G in a manner such that the multiphase fluid machine 10 is capable of functioning generally as described herein.

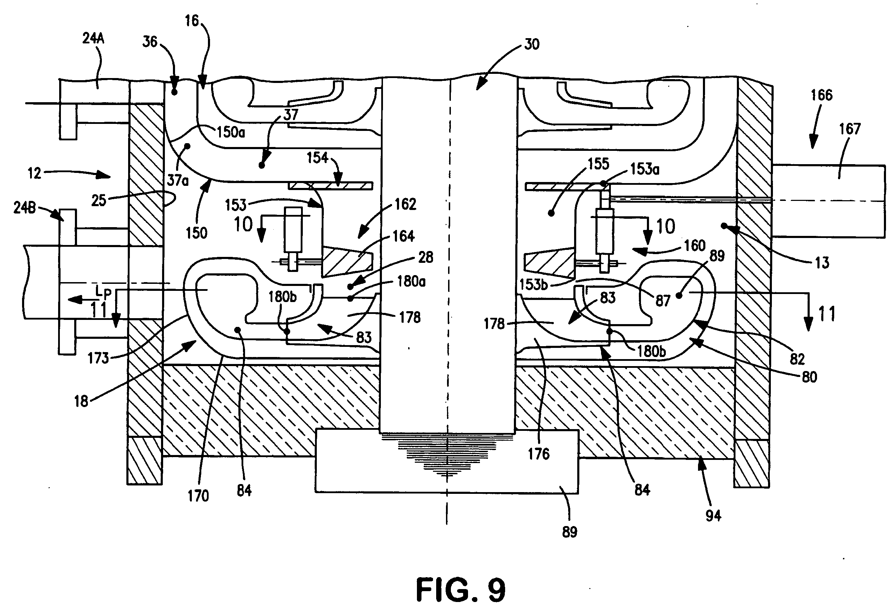

Referring to Figs. 9-12, the fluid processing device 10 preferably further includes a liquid channel assembly 150 that includes a generally circular plate 152 disposed generally between the compressor 16 and the pump 18 and a tubular channel member 153 connected with the plate 152 and disposed about the drive shaft 30 so as to extend generally axially therealong. The flow plate 150 has an outer circumferential edge 150a that is disposed against the housing inner surface 25 and is at least partially curved generally upwardly. As such, the liquid flow channel horizontal portion 37 is defined between the flow plate 152 and the compressor lower end wall 124B and has a curved section 37a defined between the plate curved edge 152a and the lower, outer edge of the compressor casing 60. Further, the tubular channel member 153 extends generally downwardly from the plate 152 and provides a generally vertical channel 155 that fluidly couples the fluid passage 34 with the pump inlet 28. Although the flow channel assembly 150 is preferred, the fluid machine 10 may be constructed without such an assembly, such that liquid horizontal channel 37 is defined generally between the compressor casing 60 and the pump casing 80 and liquid portions L flow directly into the pump inlet 28.

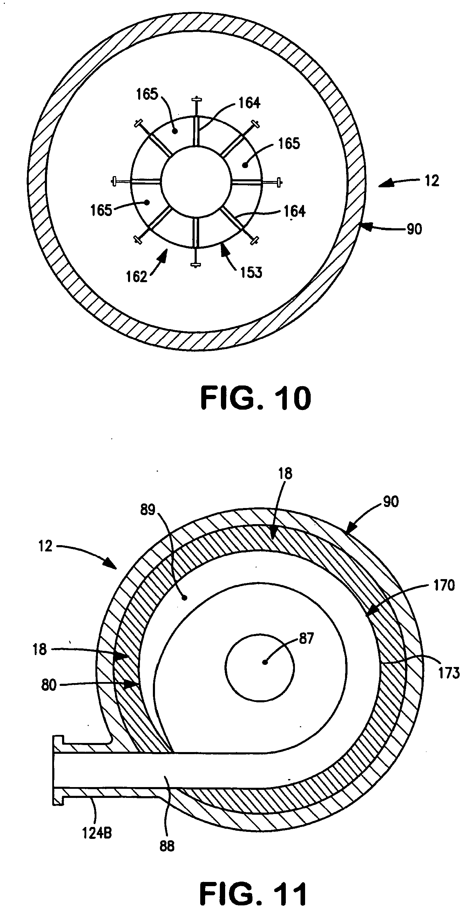

Preferably, a baffle or baffle plate 154 is disposed about the drive shaft 30 at the upper end 153a of the tubular channel member 153 so as to be generally centered within the flow plate 152. Further, the baffle 154 has a plurality of openings 156 fluidly coupling the separator 14 and the pump 18, i.e., through the liquid flow passage 34 and vertical channel 155, and is configured to generally distribute liquid portions L flowing to the baffle 154 generally about the pump inlet 28. Furthermore, the fluid processing machine 10 also preferably includes liquid flow regulator assembly 160 configured to vary a flow rate of the liquid portions L from the separator 14 to the pump inlet 28. Preferably, the flow regulator assembly 160 is preferably includes an adjustable vane assembly 162 disposed generally between the separator 14 and the pump 18, most preferably mounted to the tubular channel member 153 generally proximal to the member lower end 153b. The vane assembly 162 includes a plurality of rotatable or pivotable vanes 164 mounted to the channel member 153 and an actuator 166, preferably a motor 167, operatively connected with the vanes 164 and configured to rotate the vanes 164. A plurality of openings 165 (Fig. 10) are each defined between each pair of adjacent vanes 164, such that rotation of the blades 164 alternately increases or decreases the size of the openings 165 (and preferably also closes the openings 165), so as to adjust the capacity of the pump 18 dependent on the volumetric flow rate of the liquid portions L to the pump 18. Further, the flow regulator assembly 160 also preferably includes a flow sensor (not shown) coupled with the motor 167 and configured to sense the rate of flow through the liquid flow passage 34 and a controller (not shown) coupled with the sensor and the motor 167. The controller is configured to operate the motor 167 to adjust the vane openings 165 to generally directly correspond with the sensed liquid flow rate. In other words, the vanes 164 are rotated so as to increase the size of the openings 165 when the liquid flow rate is relatively greater and to alternatively rotate the vanes 164 to decrease or even close the openings 165 when the sensed flow rate is relatively lesser or substantially zero.

Referring to Figs. 9-11, the pump casing 82 preferably includes a generally circular "donut-shaped" main body portion 170 having upper lower surfaces 172A, 172B and an outer circumferential perimeter 173. The pump impeller 84 preferably includes a generally circular hub 176 and a plurality of elongated plates 178 spaced circumferentially about the hub 176 and each providing one of the vanes 83. The plates 178 each extend generally radially and at least partially axially so as to have a generally spiral shape. A plurality of flow passages 180 are defined between each pair of adjacent vane plates 178 and each has an inlet 180a fluidly connected with the casing suction nozzle 87 and an outlet 180b at the hub outer circumferential perimeter 176a. As such, liquid portions L flowing into the suction nozzle 87 enters into one or more of the passage inlets 180a are accelerated by the rotating vanes 83 to flow both radially and tangentially outwardly from the passage outlets 180b so as to "swirl" in a generally spiral manner into the volute chamber 89. The liquid portions L decelerate within the volute chamber 89 such that the liquid pressure is increased, and then the pressurized liquid portions L_{P} flow out of the discharge nozzle 88 into the housing liquid outlet 24B, thereafter merging with the pressurized gas portions G_{P} flowing out of the housing gas outlet 24A, as discussed above.

Although a centrifugal pump 80 is presently preferred, the pump 18 may alternatively be any other appropriate type of rotary pump, such as a gear pump or a screw pump, a reciprocating pump such as a piston pump, or any other type of pump (none shown).

It will be appreciated by those skilled in the art that changes could be made to the embodiments described above without departing from the broad inventive concept thereof. It is understood, therefore, that this invention is not limited to the particular embodiments disclosed, but it is intended to cover modifications within the scope of the present invention as defined in the appended claims.

## Claims

1. A fluid processing machine (10) for processing a multiphase fluid stream (F) including a mixture of at least a gas and a liquid, the fluid processing machine comprising:
a housing (12) including an interior chamber (13), an inlet (22) fluidly connected with the interior chamber and fluidly connectable with a source (S_{F}) of the multiphase stream, and first and second outlets (24A, 24B);
a separator (14) disposed within the housing chamber, fluidly coupled with the inlet such that the fluid stream flows generally to the separator, and configured to generally separate the fluid stream into a substantially gaseous portion (G) and a substantially liquid portion (L);
a compressor (16) disposed within the housing chamber and being fluidly coupled with the separator such that the gaseous portion flows into the compressor, the compressor being configured to compress the gaseous portion and to discharge the compressed gaseous portion through the housing first outlet (24A); and
a pump (18) disposed within the housing chamber and including an inlet (28) fluidly coupled with the separator, the pump being configured to pressurize the liquid portion and to discharge the pressurized liquid portion through the housing second outlet (24B)
**characterized in that** the pump (18) is spaced generally vertically from the separator (14) such that the liquid portion flows at least partially by gravity from the separator to the pump inlet (28).

2. The fluid processing machine (10) of claim 1 further comprising a collector chamber section (20) defined within the housing chamber (13) generally beneath the separator (14), the collector chamber being fluidly coupled with the compressor (16) and with the housing second outlet (24B), the collector chamber being configured to contain a quantity of liquid.

3. The fluid processing machine (10) of claim 1 wherein:
the compressor (16) is disposed either generally between the separator (14) and the pump (18), or generally above the separator such that the separator is disposed generally between the compressor and the pump;
the separator includes a body (40) rotatable about a central axis (41), the separator body having a first end (40a) with an opening (42) fluidly coupled with the housing inlet (22) so as to receive the fluid stream, a second end (40b) with an opening (44) fluidly coupled with the compressor, and an inner separation surface (46) extending circumferentially about the axis and generally between the body first and second ends, the separation surface defining a separation chamber (48) and being angled generally radially outwardly in a direction toward the body first end such that as the separator body rotates about the axis, liquid portions of the fluid stream contacting the separation surface are directed generally radially outwardly away from the body axis and generally axially toward the body first end so as to flow through the body first opening while a remainder of the fluid stream flows through the body second opening;
the housing has a central axis (31) and includes a generally concave wall (54) disposed within the interior chamber (13) so as to define a plenum chamber (56), the separator being rotatable about the central axis and disposed at least partially within the plenum chamber, the housing plenum wall (54) being arranged with respect to the inlet such that multiphase fluid stream is directed to flow at least one of radially about the axis and generally parallel with respect to the axis prior to entering the separator inlet;
or
the compressor casing (60) includes a generally tubular wall (120) having an outer circumferential surface (122), and the housing has an inner circumferential surface (25), the casing inner surface being spaced radially inwardly from the housing inner surface so as to form a generally annular liquid flow passage, and a plurality of elongated struts (128) extending between the housing inner surface and the casing outer surface and configured to connect the casing with the housing.

4. The fluid processing machine (10) of claim 1 wherein the housing (12) includes an inner surface (25) at least partially defining the housing chamber (13) and the compressor (16) has an outer surface (27) spaced from the housing inner surface such that at least one liquid flow passage (34) is at least partially defined between the two surfaces, the liquid flow passage fluidly coupling the separator (14) with the pump (18).

5. The fluid processing machine of claim 4, wherein:
the housing (12) has a centerline (29), the housing inner surface (25) extends circumferentially about the centerline, the compressor (16) has a central axis (15), and the compressor outer surface (27) extends circumferentially about the compressor central axis and is spaced radially inwardly from the casing outer surface (122) such that at least a portion of the liquid flow passage (34) is generally annular, and the flow passage optionally includes a generally horizontal, generally radially extending portion (37) defined between the compressor and the pump and fluidly coupled with the pump inlet (28);
at least a portion of the liquid flow passage (34) extends generally vertically such that gravity at least partially initiates flow of the liquid through the flow passage;
or
the separator (14) is configured to direct liquid generally toward the housing inner surface (25) such that liquid flows into the liquid flow channel (34) and thereafter flows at least partially by gravity to the pump inlet (28).

6. The fluid processing machine (10) of claim 1 further comprising:
a shaft (30) extending generally vertically through the housing chamber (13) and being rotatable about a central axis (29), each one of the separator (14), the compressor (16), and the pump (18) having at least one rotatable member (40, 64, 84) connected with the shaft such that shaft rotation generally operates each one of the separator, the compressor and the pump, the rotatable members being spaced apart vertically along the shaft axis;
and
optionally a motor (32) connected with the shaft and configured to rotate the shaft about the central axis.

7. The fluid processing machine (10) of claim 1 wherein:
the separator (14) includes a body (40) rotatable about a central axis (41), the separator body having a first end (40a) with an opening (42) fluidly coupled with the housing inlet (22) so as to receive the fluid stream, a second end (40b) with an opening (44) fluidly coupled with the compressor (16), and an inner separation surface (46) extending circumferentially about the axis and generally between the body first and second ends, the separation surface defining a separation chamber (48) and being angled generally radially outwardly in a direction toward the body first end such that as the separator body rotates about the axis, liquid portions of the fluid stream contacting the separation surface are directed generally radially outwardly away from the body axis and generally axially toward the body first end so as to flow through the body first opening while a remainder of the fluid stream flows through the body second opening; and
either:
the housing (12) has a generally vertically extending inner surface (25) at least partially defining the interior chamber (13); the separator body first end is spaced generally vertically upwardly with respect to the housing inlet; and the separator body further has an outer separation surface (50) extending circumferentially about the axis and generally between the body first and second ends (40a, 40b), the outer separation surface being angled generally radially outwardly in a direction toward the body first end such that as the separator body rotates about the axis, liquid portions of the fluid stream contacting the outer separation surface are directed generally radially outwardly away from the body axis and generally axially toward the body first end so as to be directed generally toward the housing inner surface;
or
the separator body (40) includes an inner tubular hub member (112); an outer tubular member (114) connected with and disposed generally coaxially about the hub, the tubular member having an upper, generally circular inlet end (114a) with a first diameter (D₁), a lower, generally circular outlet end (114b) with a second diameter (D₂), the first diameter being larger than the second diameter, and a generally conical inner surface (115) providing the separation surface, the conical surface extending circumferentially about the hub and facing generally toward the upper end; and a plurality of elongated vanes (116) extending between and connecting the inner and outer tubular members.

8. The fluid processing machine (10) of claim 1 wherein:
the compressor (16) has a casing (60) with an interior chamber (62) and an inlet opening (61) extending into the chamber and the separator (14) is disposed within the casing opening such that gas portion flows from the separator directly into the compressor chamber;
and
optionally:
the separator (14) includes a body (40) rotatable about a central axis (41), the separator body having a first end (40a) with an opening (42) fluidly coupled with the housing inlet so as to receive the fluid stream and a second, opposing end (40b) with a gas outlet opening (44); and
the compressor (16) has at least one impeller (64) disposed within the casing chamber and having an inlet (65), the separator body second end (40b) being disposed generally adjacent to the impeller such the gas portion flows from the separator gas outlet to the impeller inlet.

9. The fluid processing machine (10) of claim 1 wherein:
the compressor (16) includes:
a casing (60) disposed within the housing (12) and defining an interior chamber (62), the casing having an inlet (61) fluidly coupled with the separator (14) and an outlet (63) fluidly coupled with the housing first outlet (24A); and
at least one rotatable impeller (64) disposed within the casing chamber and configured to compress gaseous fluid portions flowing into the compressor casing inlet;
and
the compressor optionally further includes a plurality of compression stages (66), each compression stage including one rotatable impeller (64) and one fixed flow channel assembly (68) disposed about the impeller, the flow channel assembly including a diffuser channel (70), a return bend channel (72), a return channel (74) and a guide vane (76).

10. The fluid processing machine (10) of claim 1 wherein:
the pump (18) includes:
a casing (82) disposable within the housing and having an interior chamber (86), an inlet opening (87) providing the pump inlet (28), and an outlet opening (88) fluidly coupled with the housing second outlet (24B); and
a rotatable impeller (84) disposable within the casing chamber and configured to compress liquid flowing into the pump inlet and to direct the fluid toward the casing outlet opening; and
the fluid processing machine optionally further comprises:
a baffle (154) disposed generally between the compressor (16) and the pump (18) and having a plurality of openings (156) fluidly coupling the separator and the pump, the baffle being configured to generally distribute liquid flowing to the baffle generally about the pump inlet;
and
if the fluid processing machine comprises the baffle, then the fluid processing machine optionally further comprises:
an adjustable vane assembly (162) disposed generally between the separator and the pump and configured to vary a flow rate of liquid portions from the separator to the pump inlet.

11. The fluid processing machine (10) of claim 1, wherein;
the housing (12) further includes a central axis (29) extending through the chamber (13), and an inner surface (25) extending circumferentially about the axis and at least partially defining the chamber, wherein the inlet (22) of the housing is configured to receive the multiphase stream, and wherein the first and second outlets (24A, 24B) of the housing are fluidly connected with the chamber;
the compressor (16) is disposed within the housing chamber so as to be spaced axially from the separator (14), and includes an outlet fluidly connected with the housing first outlet (24A), and an outer surface (27) spaced inwardly from the housing inner surface (25) so as to define at least one flow passage (34) extending generally parallel with the housing axis; and
the pump (18) is disposed within the housing chamber (13) so as to be spaced axially from the separator (14) such that the compressor is disposed generally between the separator and the pump, and wherein the inlet (28) of the pump is fluidly coupled with the separator through the at least one flow passage so as to receive the liquid portion from the separator.

12. The fluid processing machine (10) of claim 11, wherein either:
the compressor (16) has a central axis (15) extending generally collinearly with the housing axis (31) and the casing outer compressor outer surface (27) extends generally circumferentially about the compressor axis such that the flow passage (34) is generally annular;
or
the housing (12) includes a generally circular tubular body (90) providing the housing inner surface (25) and the compressor includes a generally circular cylindrical casing (60) disposed within the housing body and providing the casing inner surface (121) such that the flow passage (34) is generally annular.

13. The fluid processing machine (10) of claim 12, wherein:
the compressor (16) has the central axis (15) extending generally collinearly with the housing axis (31) and the casing outer compressor outer surface (27) extends generally circumferentially about the compressor axis such that the flow passage (34) is generally annular; and
the fluid processing machine further comprises:
a plurality of support members (126) spaced circumferentially about the housing axis and configured to mount the compressor within the housing, each adjacent pair of support members defining a separate generally arcuate flow passage section (39) of the flow passage.

14. The fluid processing machine (10) of claim 2, wherein;
the housing (12) further includes an inner circumferential surface (25) at least partially defining the chamber (13), and the inlet extends into the chamber and is configured to receive the multiphase stream;
the compressor (16) is disposed within the housing chamber generally beneath the separator (14);
the compressor includes an inlet (61) fluidly coupled with the separator so as to receive the gaseous portion from the separator, and an outer surface (27) spaced inwardly from the housing inner surface (25) such that a generally annular flow channel (34) is defined between the two surfaces, the flow channel being fluidly coupled with the separator; and
the collector chamber section (20) is fluidly coupled with the annular flow channel.

15. The fluid processing machine (10) of claim 1, wherein;
the compressor (16) includes a casing (60) with an interior chamber (62) and an inlet (61) extending into the casing chamber, and at least one impeller (64) disposed within the casing chamber and configured to compress the gaseous portion, at least a portion of the separator (14) being disposed within the casing inlet such that the gas portion flows generally directly from the separator into the compressor chamber; and optionally:
the housing (12) includes an inner surface (25) at least partially defining the housing chamber (13),
the compressor (16) includes an outer surface (27) spaced inwardly from the housing inner surface so as to define at least one flow passage (34) extending generally parallel with the housing axis (31), and
the pump inlet (28) is fluidly coupled with the separator (14) through the at least one flow passage so as to receive the liquid portion from the separator.

## Patentansprüche

1. Fluidverarbeitungsmaschine (10) zum Verarbeiten eines mehrphasigen Fluidstroms (F), der ein Gemisch aus wenigstens einem Gas und einer Flüssigkeit einschließt, wobei die Fluidverarbeitungsmaschine Folgendes umfasst:
ein Gehäuse (12), das eine innere Kammer (13), einen Einlass (22), der fluidmäßig mit der inneren Kammer verbunden ist und fluidmäßig mit einer Quelle (S_{F}) des mehrphasigen Stroms verbunden werden kann, und einen ersten und einen zweiten Auslass (24A, 24B) einschließt,
einen Scheider (14), der innerhalb der Gehäusekammer angeordnet, fluidmäßig derart mit dem Einlass gekoppelt, dass der Fluidstrom im Allgemeinen zu dem Scheider strömt, und dafür konfiguriert ist, im Allgemeinen den Fluidstrom in einen im Wesentlichen gasförmigen Anteil (G) und einen im Wesentlichen flüssigen Anteil (L) zu scheiden,
einen Verdichter (16), der innerhalb der Gehäusekammer angeordnet und fluidmäßig derart mit dem Scheider gekoppelt ist, dass der gasförmige Anteil in den Verdichter strömt, wobei der Verdichter dafür konfiguriert ist, den gasförmigen Anteil zu verdichten und den verdichteten gasförmigen Anteil durch den ersten Gehäuseauslass (24A) abzugeben, und
eine Pumpe (18), die innerhalb der Gehäusekammer angeordnet ist und einen Einlass (28) einschließt, der fluidmäßig mit dem Scheider gekoppelt ist, wobei die Pumpe dafür konfiguriert ist, den flüssigen Anteil unter Druck zu setzen und den unter Druck gesetzten flüssigen Anteil durch den zweiten Gehäuseauslass (24B) abzugeben,
**dadurch gekennzeichnet, dass** die Pumpe (18) im Allgemeinen derart in Vertikalrichtung von dem Scheider (14) beabstandet ist, dass der flüssige Anteil wenigstens teilweise durch die Schwerkraft von dem Scheider zu dem Pumpeneinlass (28) strömt.

2. Fluidverarbeitungsmaschine (10) nach Anspruch 1, die ferner eine Sammelkammersektion (20) umfasst, die innerhalb der Gehäusekammer (13) im Allgemeinen unterhalb des Scheiders (14) definiert ist, wobei die Sammelkammer fluidmäßig mit dem Verdichter (16) und mit dem zweiten Gehäuseauslass (24B) gekoppelt ist, wobei die Sammelkammer dafür konfiguriert ist, eine Menge an Flüssigkeit aufzunehmen.

3. Fluidverarbeitungsmaschine (10) nach Anspruch 1, wobei:
der Verdichter (16) im Allgemeinen zwischen dem Scheider (14) und der Pumpe (18) oder im Allgemeinen oberhalb des Scheiders angeordnet ist, derart, dass der Scheider im Allgemeinen zwischen dem Verdichter und der Pumpe angeordnet ist,
der Scheider einen Körper (40) einschließt, der um eine Mittelachse (41) drehbar ist, wobei der Scheiderkörper ein erstes Ende (40a) mit einer Öffnung (42), die fluidmäßig mit dem Gehäuseeinlass (22) gekoppelt ist, um so den Fluidstrom aufzunehmen, ein zweites Ende (40b) mit einer Öffnung (44), die fluidmäßig mit dem Verdichter gekoppelt ist, und eine innere Scheidefläche (46), die sich umlaufend um die Achse und im Allgemeinen zwischen dem ersten und dem zweiten Körperende erstreckt, wobei die Scheidefläche eine Scheidekammer (48) definiert und im Allgemeinen derart radial nach außen in einer Richtung hin zu dem ersten Körperende abgewinkelt ist, dass, wenn sich der Scheiderkörper um die Achse dreht, flüssige Anteile des Fluidstroms, welche die Scheidefläche berühren, im Allgemeinen radial nach außen weg von der Körperachse und im Allgemeinen axial hin zu dem ersten Körperende geleitet werden, um so durch die erste Körperöffnung zu strömen, während ein Rest des Fluidstroms durch die zweite Körperöffnung strömt,
das Gehäuse eine Mittelachse (31) aufweist und eine im Allgemeinen konkave Wand (54) einschließt, die innerhalb der inneren Kammer (13) angeordnet ist, um so eine Plenumkammer (56) zu definieren, wobei der Scheider um die Mittelachse drehbar und wenigstens teilweise innerhalb der Plenumkammer angeordnet ist, wobei die Gehäuse-Plenumwand (54) in Bezug auf den Einlass so angeordnet ist, dass der mehrphasige Fluidstrom so geleitet wird, dass er wenigstens eines von radial um die Achse und im Allgemeinen parallel in Bezug auf die Achse strömt, bevor er in den Scheidereinlass eintritt
oder
die Verdichterhülle (60) eine im Allgemeinen röhrenförmige Wand (120) einschließt, die eine Außenumfangsfläche (122) aufweist, und das Gehäuse eine Innenumfangsfläche (25) aufweist, wobei die Hülleninnenfläche radial nach innen von der Gehäuseinnenfläche beabstandet ist, um so einen im Allgemeinen ringförmigen Flüssigkeitsstrom-Durchgang zu bilden, und mehrere längliche Streben (128) sich zwischen der Gehäuseinnenfläche und der Hüllenaußenfläche erstrecken und dafür konfiguriert sind, die Hülle mit dem Gehäuse zu verbinden.

4. Fluidverarbeitungsmaschine (10) nach Anspruch 1, wobei das Gehäuse (12) eine Innenfläche (25) einschließt, die wenigstens teilweise die Gehäusekammer (13) definiert, und der Verdichter (16) eine Außenfläche (27) aufweist, die derart von der Gehäuseinnenfläche beabstandet ist, dass wenigstens ein Flüssigkeitsstrom-Durchgang (34) wenigstens teilweise zwischen den zwei Flächen definiert wird, wobei der Flüssigkeitsstrom-Durchgang den Scheider (14) fluidmäßig mit der Pumpe (18) koppelt.

5. Fluidverarbeitungsmaschine nach Anspruch 4, wobei:
das Gehäuse (12) eine Mittellinie (29) aufweist, sich die Gehäuseinnenfläche (25) umlaufend um die Mittellinie erstreckt, der Verdichter (16) eine Mittelachse (15) aufweist und sich die Verdichteraußenfläche (27) umlaufend um die Verdichtermittelachse erstreckt und radial nach innen von der Hüllenaußenfläche (122) beabstandet ist derart, dass wenigstens ein Abschnitt des Flüssigkeitsstrom-Durchgangs (34) im Allgemeinen ringförmig ist, und der Flüssigkeitsstrom-Durchgang einen im Allgemeinen horizontalen, sich im Allgemeinen radial erstreckenden Abschnitt (37) einschließt, der zwischen dem Verdichter und der Pumpe definiert und fluidmäßig mit dem Pumpeneinlass (28) gekoppelt ist,
sich wenigstens ein Abschnitt des Flüssigkeitsstrom-Durchgangs (34) im Allgemeinen derart vertikal erstreckt, dass die Schwerkraft wenigstens teilweise einen Strom der Flüssigkeit durch den Stromdurchgang einleitet,
oder
der Scheider (14) dafür konfiguriert ist, Flüssigkeit im Allgemeinen derart hin zu der Gehäuseinnenfläche (25) zu leiten, dass die Flüssigkeit in den Flüssigkeitsstrom-Kanal (34) strömt und danach wenigstens teilweise durch die Schwerkraft zu dem Pumpeneinlass (28) strömt.

6. Fluidverarbeitungsmaschine (10) nach Anspruch 1, die ferner Folgendes umfasst:
eine Welle (30), die sich im Allgemeinen vertikal durch die Gehäusekammer (13) erstreckt und um eine Mittelachse (29) drehbar ist, wobei jedes von dem Scheider (14), dem Verdichter (16) und der Pumpe (18) wenigstens ein drehbares Element (40, 64, 84) aufweist, das derart mit der Welle verbunden ist, dass die Wellendrehung im Allgemeinen jedes von dem Scheider, dem Verdichter und der Pumpe betätigt, wobei die drehbaren Elemente vertikal entlang der Wellenachse voneinander beabstandet sind,
und
wahlweise einen Motor (32), der mit der Welle verbunden und dafür konfiguriert ist, die Welle um die Mittelachse zu drehen.

7. Fluidverarbeitungsmaschine (10) nach Anspruch 1, wobei:
der Scheider (14) einen Körper (40) einschließt, der um eine Mittelachse (41) drehbar ist, wobei der Scheiderkörper ein erstes Ende (40a) mit einer Öffnung (42), die fluidmäßig mit dem Gehäuseeinlass (22) gekoppelt ist, um so den Fluidstrom aufzunehmen, ein zweites Ende (40b) mit einer Öffnung (44), die fluidmäßig mit dem Verdichter (16) gekoppelt ist, und eine innere Scheidefläche (46), die sich umlaufend um die Achse und im Allgemeinen zwischen dem ersten und dem zweiten Körperende erstreckt, wobei die Scheidefläche eine Scheidekammer (48) definiert und im Allgemeinen derart radial nach außen in einer Richtung hin zu dem ersten Körperende abgewinkelt ist, dass, wenn sich der Scheiderkörper um die Achse dreht, flüssige Anteile des Fluidstroms, welche die Scheidefläche berühren, im Allgemeinen radial nach außen weg von der Körperachse und im Allgemeinen axial hin zu dem ersten Körperende geleitet werden, um so durch die erste Körperöffnung zu strömen, während ein Rest des Fluidstroms durch die zweite Körperöffnung strömt, und
entweder:
das Gehäuse (12) eine sich im Allgemeinen vertikal erstreckende Innenfläche (25) aufweist, die wenigstens teilweise die innere Kammer (13) definiert, das erste Scheiderkörperende im Allgemeinen vertikal nach oben in Bezug auf den Gehäuseeinlass beabstandet ist und der Scheiderkörper ferner eine äußere Scheidefläche (50) aufweist, die sich umlaufend um die Achse und im Allgemeinen zwischen dem ersten und dem zweiten Körperende (40a, 40b) erstreckt, wobei die äußere Scheidefläche im Allgemeinen derart radial nach außen in einer Richtung hin zu dem ersten Körperende abgewinkelt ist, dass, wenn sich der Scheider um die Achse dreht, flüssige Anteile des Fluidstroms, welche die äußere Scheidefläche berühren, im Allgemeinen radial nach außen von der Körperachse weg und im Allgemeinen axial zu dem ersten Körperende hin geleitet werden, um so im Allgemeinen zu der Gehäuseinnenfläche hin geleitet zu werden,
oder
der Scheiderkörper (40) ein inneres röhrenförmiges Nabenelement (112), ein äußeres röhrenförmiges Element (114), das mit der Nabe verbunden und im Allgemeinen koaxial um dieselbe angeordnet ist, wobei das röhrenförmige Element ein oberes, im Allgemeinen kreisförmiges Einlassende (114a) mit einem ersten Durchmesser (D₁), ein unteres, im Allgemeinen kreisförmiges Auslassende (114b) mit einem zweiten Durchmesser (D₂), wobei der erste Durchmesser größer ist als der zweite Durchmesser, und eine im Allgemeinen konische Innenfläche (115), welche die Scheidefläche bereitstellt, wobei sich die konische Fläche umlaufend um die Nabe erstreckt und im Allgemeinen zu dem oberen Ende hin zeigt, und mehrere längliche Schaufeln (116), die sich zwischen dem inneren und dem äußeren röhrenförmigen Element erstrecken, einschließt.

8. Fluidverarbeitungsmaschine (10) nach Anspruch 1, wobei:
der Verdichter (16) eine Hülle (60) mit einer inneren Kammer (62) und einer Einlassöffnung (61), die sich in die Kammer erstreckt, aufweist und der Scheider (14) derart innerhalb der Hüllenöffnung angeordnet ist, dass ein Gasanteil von dem Scheider unmittelbar in die Verdichterkammer strömt,
und
wahlweise:
der Scheider (14) einen Körper (40) einschließt, der um eine Mittelachse (41) drehbar ist, wobei der Scheiderkörper ein erstes Ende (40a) mit einer Öffnung (42), die fluidmäßig mit dem Gehäuseeinlass gekoppelt ist, um so den Fluidstrom aufzunehmen, und ein zweites, entgegengesetztes Ende (40b) mit einer Gasauslassöffnung (44) aufweist, und
der Verdichter (16) wenigstens ein Laufrad (64) aufweist, das innerhalb der Hüllenkammer angeordnet ist und einen Einlass (65) aufweist, wobei das zweite Scheiderkörperende (40b) im Allgemeinen derart angrenzend an das Laufrad angeordnet ist, dass der Gasanteil von dem Scheidergasauslass zu dem Laufradeinlass strömt.

9. Fluidverarbeitungsmaschine (10) nach Anspruch 1, wobei:
der Verdichter (16) Folgendes einschließt:
eine Hülle (60), die innerhalb des Gehäuses (12) angeordnet ist und eine innere Kammer (62) definiert, wobei die Hülle einen Einlass (61), der fluidmäßig mit dem Scheider (14) gekoppelt ist, und einen Auslass (63), der fluidmäßig mit dem ersten Gehäuseauslass (24A) gekoppelt ist, aufweist, und
wenigstens ein drehbares Laufrad (64), das innerhalb der Hüllenkammer angeordnet und dafür konfiguriert ist, gasförmige Fluidanteile, die in den Verdichter-Hülleneinlass strömen, zu verdichten,
und
der Verdichter wahlweise ferner mehrere Verdichtungsstufen (66), wobei jede Verdichtungsstufe ein drehbares Laufrad (64) und eineunbewegliche Stromkanal-Baugruppe (68), die um das Laufrad angeordnet ist, einschließt, wobei die Stromkanal-Baugruppe einen Diffusorkanal (70), einen Rückführungsbiegungskanal (72), einen Rückführungskanal (74) und eine Führungsschaufel (76) einschließt.

10. Fluidverarbeitungsmaschine (10) nach Anspruch 1, wobei:
die Pumpe (18) Folgendes einschließt:
eine Hülle (82), die innerhalb des Gehäuses angeordnet werden kann und eine innere Kammer (86), eine Einlassöffnung (87), die den Pumpeneinlass (28) bereitstellt, und eine Auslassöffnung (88), die fluidmäßig mit dem zweiten Gehäuseauslass (24B) gekoppelt ist, aufweist, und
ein drehbares Laufrad (84), das innerhalb der Hüllenkammer angeordnet werden kann und dafür konfiguriert ist, Flüssigkeit, die in den Pumpeneinlass strömt zu verdichten und das Fluid zu der Hüllenauslassöffnung hin zu leiten, und
wobei die Fluidverarbeitungsmaschine wahlweise ferner Folgendes umfasst:
eine Ablenkfläche (154), die im Allgemeinen zwischen dem Verdichter (16) und der Pumpe (18) angeordnet ist und mehrere Öffnungen (156) aufweist, die den Scheider und die Pumpe fluidmäßig koppeln, wobei die Ablenkfläche dafür konfiguriert ist, im Allgemeinen Fluid, das zu der Ablenkfläche strömt, im Allgemeinen um den Pumpeneinlass zu verteilen,
und,
falls die Fluidverarbeitungsmaschine die Ablenkfläche umfasst, dann die Fluidverarbeitungsmaschine wahlweise ferner Folgendes umfasst:
eine einstellbare Schaufelbaugruppe (162), die im Allgemeinen zwischen dem Scheider und der Pumpe angeordnet und dafür konfiguriert ist, eine Durchflussmenge von flüssigen Anteilen von dem Scheider zu dem Pumpeneinlass zu verändern.

11. Fluidverarbeitungsmaschine (10) nach Anspruch 1, wobei:
das Gehäuse (12) ferner eine Mittelachse (29), die sich durch die Kammer (13) erstreckt, und eine Innenfläche (25), die sich umlaufend um die Achse erstreckt und wenigstens teilweise die Kammer definiert, einschließt, wobei der Einlass (22) des Gehäuses dafür konfiguriert ist, den mehrphasigen Strom aufzunehmen, und wobei der erste und der zweite Auslass (24A, 24B) des Gehäuses fluidmäßig mit der Kammer verbunden sind,
der Verdichter (16) derart innerhalb der Gehäusekammer angeordnet ist, dass er axial von dem Scheider (14) beabstandet ist, und einen Auslass, der fluidmäßig mit dem ersten Gehäuseauslass (24A) verbunden ist, und eine Außenfläche (27), die nach innen von der Gehäuseinnenfläche (25) beabstandet ist, um so wenigstens einen Stromdurchgang (34) zu definieren, der sich im Allgemeinen parallel zu der Gehäuseachse erstreckt, und
die Pumpe (18) so innerhalb der Gehäusekammer (13) angeordnet ist, dass sie derart axial von dem Scheider (14) beabstandet ist, dass der Verdichter im Allgemeinen zwischen dem Scheider und der Pumpe angeordnet ist, und wobei der Einlass (28) der Pumpe durch den wenigstens einen Stromdurchgang fluidmäßig mit dem Scheider gekoppelt ist, um so den flüssigen Anteil aus dem Scheider aufzunehmen.

12. Fluidverarbeitungsmaschine (10) nach Anspruch 11, wobei entweder:
der Verdichter (16) eine Mittelachse (15) aufweist, die sich im Allgemeinen kollinear mit der Gehäuseachse (31) erstreckt, und sich die Verdichterhüllen-Außenfläche (27) im Allgemeinen derart umlaufend um die Verdichterachse erstreckt, dass der Stromdurchgang (34) im Allgemeinen ringförmig ist,
oder
das Gehäuse (12) einen im Allgemeinen kreisförmigen röhrenförmigen Körper (90) einschließt, der die Gehäuseinnenfläche (25) bereitstellt, und der Verdichter eine im Allgemeinen kreisförmige zylindrische Hülle (60) einschließt, die derart innerhalb des Gehäusekörpers angeordnet ist und die Hülleninnenfläche (121) bereitstellt, dass der Stromdurchgang (34) im Allgemeinen ringförmig ist.

13. Fluidverarbeitungsmaschine (10) nach Anspruch 12, wobei:
der Verdichter (16) die Mittelachse (15) aufweist, die sich im Allgemeinen kollinear mit der Gehäuseachse (31) erstreckt, und sich die Verdichterhüllen-Außenfläche (27) im Allgemeinen derart umlaufend um die Verdichterachse erstreckt, dass der Stromdurchgang (34) im Allgemeinen ringförmig ist, und
die Fluidverarbeitungsmaschine ferner Folgendes umfasst:
mehrere Stützelemente (126), die umlaufend um die Gehäuseachse beabstandet und dafür konfiguriert sind, den Verdichter innerhalb des Gehäuses anzubringen, wobei jedes benachbarte Paar von Stützelementen eine gesonderte im Allgemeinen bogenförmige Stromdurchgangssektion (39) des Stromdurchgangs definiert.

14. Fluidverarbeitungsmaschine (10) nach Anspruch 2, wobei:
das Gehäuse (12) ferner eine Innenumfangsfläche (25) einschließt, die wenigstens teilweise die Kammer (13) definiert, und sich der Einlass in die Kammer erstreckt und dafür konfiguriert ist, den mehrphasigen Strom aufzunehmen,
der Verdichter (16) innerhalb der Gehäusekammer im Allgemeinen unterhalb des Scheiders (14) angeordnet ist,
der Verdichter einen Einlass (61), der fluidmäßig mit dem Scheider gekoppelt ist, um so den gasförmigen Anteil aus dem Scheider aufzunehmen, und eine Außenfläche (27), die derart von der Gehäuseinnenfläche (25) nach innen beabstandet ist, dass ein im Allgemeinen ringförmiger Stromkanal (34) zwischen den zwei Flächen definiert wird, wobei der Stromkanal fluidmäßig mit dem Scheider gekoppelt ist, und
die Sammelkammersektion (20) fluidmäßig mit dem ringförmigen Stromkanal gekoppelt ist.

15. Fluidverarbeitungsmaschine (10) nach Anspruch 1, wobei:
der Verdichter (16) eine Hülle (60) mit einer inneren Kammer (62) und einem Einlass (61), der sich in die Hüllenkammer erstreckt, und wenigstens ein Laufrad (64), das innerhalb der Hüllenkammer angeordnet und dafür konfiguriert ist, den gasförmigen Anteil zu verdichten, einschließt, wobei wenigstens ein Abschnitt des Scheiders (14) derart innerhalb des Hülleneinlasses angeordnet ist, dass der Gasanteil im Allgemeinen unmittelbar aus dem Scheider in die Verdichterkammer strömt, und wahlweise:
das Gehäuse (12) eine Innenfläche (25) einschließt, die wenigstens teilweise die Gehäusekammer (13) definiert,
der Verdichter (16) eine Außenfläche (27) einschließt, die von der Gehäuseinnenfläche nach innen beabstandet ist, um so wenigstens einen Stromdurchgang (34) zu definieren, der sich im Allgemeinen parallel zu der Gehäuseachse (31) erstreckt, und
der Pumpeneinlass (28) durch den wenigstens einen Stromdurchgang fluidmäßig mit dem Scheider (14) gekoppelt ist, um so den flüssigen Anteil aus dem Scheider aufzunehmen.

## Revendications

1. Machine de traitement de fluide (10) pour traiter un flux de fluide multi phase (F) comprenant un mélange d'au moins un gaz et un liquide, la machine de traitement de fluide comprenant :
un boîtier (12) comprenant une chambre intérieure (13), une entrée (22) reliée hydrauliquement à la chambre intérieure et pouvant être reliée hydrauliquement à une source (S_{F}) du flux multi phase, et des première et seconde sorties (24A, 24B) ;
un séparateur (14) disposé à l'intérieur de la chambre de boîtier, relié hydrauliquement à l'entrée de telle sorte que le flux de fluide s'écoule de manière générale vers le séparateur, et configuré pour séparer de manière générale le flux de fluide en une partie sensiblement gazeuse (G) et une partie sensiblement liquide (L) ;
un compresseur (16) disposé dans la chambre de boîtier et étant relié hydrauliquement au séparateur de telle sorte que la partie gazeuse s'écoule dans le compresseur, le compresseur étant configuré pour comprimer la partie gazeuse et évacuer la partie gazeuse comprimée à travers le première sortie de boîtier (24A) ; et
une pompe (18) disposée à l'intérieur de la chambre de boîtier et comprenant une entrée (28) reliée hydrauliquement au séparateur, la pompe étant configurée pour mettre sous pression la partie liquide et pour évacuer la partie liquide sous pression à travers la seconde sortie de boîtier (24B)
**caractérisée en ce que** la pompe (18) est espacée de manière générale verticalement du séparateur (14) de telle sorte que la partie liquide s'écoule au moins partiellement par gravité à partir du séparateur vers l'entrée de pompe (28).

2. Machine de traitement de fluide (10) selon la revendication 1, comprenant en outre une section de chambre de collecteur (20) définie à l'intérieur de la chambre de boîtier (13) de façon générale au-dessous du séparateur (14), la chambre de collecteur étant reliée hydrauliquement au compresseur (16) et à la seconde sortie de boîtier (24B), la chambre de collecteur étant configurée pour contenir une certaine quantité de liquide.

3. Machine de traitement de fluide (10) selon la revendication 1, dans laquelle :
le compresseur (16) est disposé de façon générale entre le séparateur (14) et la pompe (18), ou de manière générale au-dessus du séparateur de telle sorte que le séparateur est de manière générale disposé entre le compresseur et la pompe ;
le séparateur comprend un corps (40) pouvant tourner autour d'un axe central (41), le corps de séparateur ayant une première extrémité (40a) ayant une ouverture (42) reliée hydrauliquement à l'entrée de boîtier (22) de manière à recevoir le flux de fluide, une seconde extrémité (40b) ayant une ouverture (44) reliée hydrauliquement au compresseur, et une surface de séparation intérieure (46) s'étendant de manière circonférentielle autour de l'axe et de manière générale entre les première et seconde extrémités du corps, la surface de séparation définissant une chambre de séparation (48) et étant inclinée de manière générale radialement vers l'extérieur en direction de la première extrémité du corps de telle sorte que, lorsque le corps de séparateur tourne autour de l'axe, des parties liquides du flux de fluide en contact avec la surface de séparation sont dirigées de manière générale radialement vers l'extérieur loin de l'axe du corps et de manière générale axialement vers la première extrémité du corps de manière à s'écouler à travers la première ouverture du corps tandis qu'un reste du flux de fluide circule à travers la seconde ouverture du corps ;
le boîtier a un axe central (31) et comprend une paroi de forme générale concave (54) disposée dans la chambre intérieure (13) de manière à définir une chambre de distribution (56), le séparateur étant mobile en rotation autour de l'axe central et disposé au moins partiellement à l'intérieur de la chambre de distribution, la paroi de distribution du boîtier (54) étant agencée par rapport à l'entrée de telle sorte que le flux de fluide multi phase est dirigé pour s'écouler au moins tout d'abord radialement autour de l'axe et de manière générale parallèlement par rapport à l'axe avant de pénétrer dans l'entrée du séparateur ;
ou
le carter de compresseur (60) comprend une paroi de manière générale tubulaire (120) ayant une surface circonférentielle extérieure (122), et le boîtier a une surface circonférentielle intérieure (25), la surface intérieure du carter étant espacée radialement vers l'intérieur depuis la surface intérieure du boîtier de manière à former un passage d'écoulement de liquide de manière générale annulaire, et une pluralité d'entretoises allongées (128) s'étendant entre la surface intérieure du boîtier et la surface extérieure du boîtier et configurées pour connecter le carter au boîtier.

4. Machine de traitement de fluide (10) selon la revendication 1, dans laquelle le boîtier (12) comprend une surface intérieure (25) définissant au moins partiellement la chambre de boîtier (13) et le compresseur (16) a une surface extérieure (27) espacée de la surface intérieure du boîtier de telle sorte qu'au moins un passage d'écoulement de liquide (34) est au moins partiellement défini entre les deux surfaces, le passage d'écoulement de liquide reliant hydrauliquement le séparateur (14) à la pompe (18).

5. Machine de traitement de fluide selon la revendication 4, dans lequel :
le boîtier (12) a une ligne médiane (29), la surface intérieure du boîtier (25) s'étend circonférentiellement autour de la ligne centrale, le compresseur (16) a un axe central (15) et la surface extérieure du compresseur (27) s'étend circonférentiellement autour de l'axe central du compresseur et est espacée radialement vers l'intérieur à partir de la surface extérieure du carter (122) de telle sorte qu'au moins une partie du passage d'écoulement de liquide (34) est de manière générale annulaire, et le passage d'écoulement comprend facultativement, une partie horizontale s'étendant de manière générale radialement (37) définie entre le compresseur et la pompe et reliée hydrauliquement à l'entrée de pompe (28) ;
au moins une partie du passage d'écoulement de liquide (34) s'étend de manière générale verticalement de telle sorte que la gravité déclenche au moins partiellement l'écoulement du liquide à travers le passage d'écoulement ;
ou
le séparateur (14) est configuré pour diriger du liquide de manière générale vers la surface intérieure du boîtier (25) de telle sorte que le liquide s'écoule dans le canal d'écoulement de liquide (34) et ensuite s'écoule au moins partiellement par gravité vers l'entrée de la pompe (28).

6. Machine de traitement de fluide (10) selon la revendication 1, comprenant en outre :
un arbre (30) s'étendant de manière générale verticalement à travers la chambre de boîtier (13) et pouvant tourner autour d'un axe central (29), chacun parmi le séparateur (14), le compresseur (16) et la pompe (18) comportant au moins un élément rotatif (40, 64, 84) relié à l'arbre de telle sorte que la rotation de l'arbre actionne de manière générale chacun parmi le séparateur, le compresseur et la pompe, les éléments rotatifs étant espacés verticalement le long de l'axe de l'arbre ;
et
facultativement, un moteur (32) relié à l'arbre et configuré pour faire tourner l'arbre autour de l'axe central.

7. Machine de traitement de fluide (10) selon la revendication 1, dans laquelle : le séparateur (14) comprend un corps (40) pouvant tourner autour d'un axe central (41), le corps de séparateur ayant une première extrémité (40a) ayant une ouverture (42) reliée hydrauliquement à l'entrée de boîtier (22) de manière à recevoir le flux de fluide, une seconde extrémité (40b) ayant une ouverture (44) reliée hydrauliquement au compresseur (16) et une surface de séparation intérieure (46) s'étendant circonférentiellement autour de l'axe et de manière générale entre les première et seconde extrémités du corps, la surface de séparation définissant une chambre de séparation (48) et étant inclinée de manière générale radialement vers l'extérieur en direction de la première extrémité du corps de telle sorte que, lorsque le corps de séparateur tourne autour de l'axe, des parties de liquide du flux de fluide en contact avec la surface de séparation sont dirigées de manière générale radialement vers l'extérieur loin de l'axe du corps et de manière générale axialement vers la première extrémité du corps de manière à s'écouler à travers la première ouverture du corps tandis que le reste du flux de fluide s'écoule à travers la seconde ouverture du corps ; et
Soit :
le boîtier (12) présente une surface intérieure s'étendant de manière générale verticalement (25) définissant au moins partiellement la chambre intérieure (13) ; la première extrémité du corps de séparateur est espacée globalement verticalement vers le haut par rapport à l'entrée du boîtier ; et le corps de séparateur comporte en outre une surface extérieure de séparation (50) s'étendant de manière circonférentielle autour de l'axe et de manière générale entre les première et seconde extrémités du corps (40a, 40b), la surface de séparation extérieure étant inclinée de manière générale radialement vers l'extérieur en direction de la première extrémité du corps de telle sorte que lorsque le corps de séparation tourne autour de l'axe, des parties de liquide du flux de fluide en contact avec la surface de séparation extérieure sont dirigées de manière générale radialement vers l'extérieur loin de l'axe du corps et de manière générale axialement vers la première extrémité du corps de manière à être dirigées de façon générale vers la surface intérieure de boîtier ;
soit
le corps de séparation (40) comprend un élément de moyeu tubulaire intérieur (112) ; un élément tubulaire extérieur (114) relié au moyeu et disposé de manière générale de façon coaxiale autour du moyeu, l'élément tubulaire ayant une extrémité d'entrée supérieure, de manière générale circulaire (114a) ayant un premier diamètre (D1), une extrémité de sortie inférieure, de manière générale circulaire (114b) ayant un second diamètre (D2), le premier diamètre étant plus grand que le second diamètre et une surface intérieure globalement conique (115) constituant la surface de séparation, la surface conique s'étendant de manière circonférentielle autour du moyeu et étant dirigée de manière générale vers l'extrémité supérieure ; et une pluralité d'ailettes allongées (116) étendant entre les éléments tubulaires intérieur et extérieur et les reliant.

8. Machine de traitement de fluide (10) selon la revendication 1, dans laquelle :
le compresseur (16) comporte un carter (60) ayant une chambre intérieure (62) et une ouverture d'entrée (61) s'étendant dans la chambre et le séparateur (14) est disposé à l'intérieur de l'ouverture du carter de telle sorte que la partie de gaz s'écoule depuis le séparateur directement dans la chambre de compression ;
et
facultativement :
le séparateur (14) comprend un corps (40) pouvant tourner autour d'un axe central (41), le corps de séparateur ayant une première extrémité (40a) ayant une ouverture (42) reliée hydrauliquement à l'entrée du boîtier de manière à recevoir le flux de fluide et une seconde extrémité opposée (40b) ayant une ouverture de sortie de gaz (44) ; et
le compresseur (16) comporte au moins une roue à aubes (64) disposée dans la chambre de carter et possédant une entrée (65), la seconde extrémité du corps de séparateur (40b) étant disposée de manière générale adjacente à la roue de sorte que la partie de gaz s'écoule depuis la sortie de gaz du séparateur vers l'entrée de la roue à aubes.

9. Machine de traitement de fluide (10) selon la revendication 1, dans laquelle :
le compresseur (16) comprend :
un carter (60) disposé à l'intérieur du boîtier (12) et définissant une chambre intérieure (62), le carter ayant une entrée (61) reliée hydrauliquement au séparateur (14) et une sortie (63) reliée hydrauliquement à la première sortie du boîtier (24A) ; et
au moins une roue à aubes rotative (64) disposée à l'intérieur de la chambre de carter et configurée pour comprimer des portions de fluide gazeux s'écoulant dans l'entrée du carter de compresseur ;
et
le compresseur comprend en outre facultativement une pluralité d'étages de compression (66), chaque étage de compression comprenant une roue à aubes rotative (64) et un ensemble de canaux d'écoulement fixés (68) disposés autour de la roue à aubes, l'ensemble de canaux d'écoulement comprenant un canal de diffuseur (70), un canal coudé de retour (72), un canal de retour (74) et une aube de guidage (76).

10. Machine de traitement de fluide (10) selon la revendication 1, dans laquelle :
la pompe (18) comprend :
un carter (82) disposé à l'intérieur du boîtier et ayant une chambre intérieure (86), une ouverture d'entrée (87) fournissant l'entrée de pompe (28) et une ouverture de sortie (88) reliée hydrauliquement à la seconde sortie de boîtier (24B) ; et
une roue à aubes rotative (84) pouvant être disposée dans la chambre de carter et configurée pour comprimer le liquide s'écoulant dans l'entrée de la pompe et pour diriger le fluide vers l'ouverture de sortie du carter ; et
la machine de traitement de fluide comprend en outre facultativement :
un déflecteur (154) disposé de manière générale entre le compresseur (16) et la pompe (18) et ayant une pluralité d'ouvertures (156) reliant hydrauliquement le séparateur et la pompe, le déflecteur étant configuré pour répartir de manière générale le liquide s'écoulant vers le déflecteur de manière générale vers l'entrée de la pompe ;
et
si la machine de traitement de fluide comprend le déflecteur, alors la machine de traitement de fluide comprend facultativement en outre :
un ensemble d'aubes réglables (162) disposées de manière générale entre le séparateur et la pompe et configurées pour faire varier le débit de parties liquides depuis le séparateur vers l'entrée de la pompe.

11. Machine de traitement de fluide (10) selon la revendication 1, dans laquelle :
le boîtier (12) comprend en outre un axe central (29) traversant la chambre (13) et une surface intérieure (25) s'étendant de manière circonférentielle autour de l'axe et définissant au moins partiellement la chambre, l'entrée (22) du boîtier étant configurée pour recevoir le flux multi phase, et les première et seconde sorties (24A, 24B) du boîtier étant reliées hydrauliquement à la chambre ;
le compresseur (16) est disposé à l'intérieur de la chambre du boîtier de façon à être espacé axialement du séparateur (14) et comporte une sortie reliée hydrauliquement à la première sortie de boîtier (24A) et une surface extérieure (27) espacée vers l'intérieur à partir de la surface intérieure de boîtier (25) de manière à définir au moins un passage d'écoulement (34) s'étendant de manière générale parallèlement à l'axe du boîtier ; et
la pompe (18) est disposée à l'intérieur de la chambre de boîtier (13) de façon à être espacée axialement du séparateur (14) de telle sorte que le compresseur est disposé de manière générale entre le séparateur et la pompe, et dans laquelle l'orifice d'entrée (28) de la pompe est relié hydrauliquement au séparateur à travers le au moins un passage d'écoulement de manière à recevoir la partie liquide provenant du séparateur.

12. Machine de traitement de fluide (10) selon la revendication 11, dans laquelle :
le compresseur (16) a un axe central (15) s'étendant de manière générale colinéairement à l'axe de boîtier (31) et la surface extérieure du carter extérieur du compresseur (27) s'étend de manière générale circonférentiellement autour de l'axe de compression de sorte que le passage d'écoulement (34) est de manière générale annulaire ;
ou
le boîtier (12) comprend un corps tubulaire de manière générale circulaire (90) fournissant la surface intérieure du boîtier (25) et le compresseur comprend un carter cylindrique de manière générale circulaire (60) disposé à l'intérieur du corps de boîtier et fournissant la surface intérieure de boîtier (121) de telle sorte que le passage d'écoulement (34) est de manière générale annulaire.

13. Machine de traitement de fluide (10) selon la revendication 12, dans laquelle :
le compresseur (16) comporte l'axe central (15) s'étendant de manière générale colinéairement à l'axe de boîtier (31) et la surface extérieure de carter du compresseur extérieur (27) s'étend de manière générale circonférentiellement autour de l'axe du compresseur de sorte que le passage d'écoulement (34) est de manière générale annulaire ; et
la machine de traitement de fluide comprend en outre :
une pluralité d'éléments de support (126) espacés de manière circonférentielle autour de l'axe du boîtier et configurés de manière à monter le compresseur à l'intérieur du boîtier, chaque paire adjacente d'éléments de support définissant une section de passage d'écoulement (39) séparée de manière générale en forme d'arc, du passage d'écoulement.

14. Machine de traitement de fluide (10) selon la revendication 2, dans laquelle:
le boîtier (12) comprend en outre une surface circonférentielle intérieure (25) définissant au moins partiellement la chambre (13), et l'entrée s'étend dans la chambre et est configurée pour recevoir le flux multi phase ;
le compresseur (16) est disposé à l'intérieur de la chambre de boîtier de manière générale au-dessous du séparateur (14) ;
le compresseur comprend une entrée (61) reliée hydrauliquement au séparateur de façon à recevoir la partie gazeuse provenant du séparateur, et une surface extérieure (27) espacée vers l'intérieur depuis la surface intérieure du boîtier (25) de telle sorte qu'un canal d'écoulement de manière générale annulaire (34) est défini entre les deux surfaces, le canal d'écoulement étant relié hydrauliquement au séparateur ; et
la section de chambre de collecteur (20) est reliée hydrauliquement au canal d'écoulement annulaire.

15. Machine de traitement de fluide (10) selon la revendication 1, dans laquelle : le compresseur (16) comprend un carter (60) ayant une chambre intérieure (62) et une entrée (61) s'étendant dans la chambre de carter, et au moins une roue à aubes (64) disposée dans la chambre de carter et configurée de manière à comprimer la partie gazeuse, au moins une partie du séparateur (14) étant disposée à l'intérieur de l'entrée du carter de telle sorte que la partie gazeuse s'écoule de manière générale directement à partir du séparateur dans la chambre de compresseur ; et facultativement :
le boîtier (12) comprend une surface intérieure (25) définissant au moins partiellement la chambre de boîtier (13),
le compresseur (16) comprend une surface extérieure (27) espacée vers l'intérieur depuis la surface intérieure du boîtier de manière à définir au moins un passage d'écoulement (34) s'étendant de manière générale parallèlement à l'axe du boîtier (31),et
l'entrée de pompe (28) est reliée hydrauliquement au séparateur (14) à travers le au moins un passage d'écoulement de manière à recevoir la partie liquide provenant du séparateur.
